(19)

Europäisches Patentamt

European Patent Office

Office européen des brevets

(11)　EP 2 495 628 A1

(12)　**EUROPEAN PATENT APPLICATION**
published in accordance with Art. 153(4) EPC

(43) Date of publication:
   **05.09.2012 Bulletin 2012/36**

(21) Application number: **10826930.9**

(22) Date of filing: **29.10.2010**

(51) Int Cl.:
   *G05B 19/4103* (2006.01)　　*B23Q 15/00* (2006.01)
   *G05B 19/4093* (2006.01)

(86) International application number:
   **PCT/JP2010/069762**

(87) International publication number:
   **WO 2011/052800 (05.05.2011 Gazette 2011/18)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**

(30) Priority: **30.10.2009　JP 2009250638**

(71) Applicant: **MAKINO MILLING MACHINE CO., LTD.
   Meguro-ku
   Tokyo 152-8578 (JP)**

(72) Inventors:
   • **TANUMA, Masashi
     Aiko-gun
     Kanagawa 243-0303 (JP)**
   • **ODA, Mitsunari
     Aiko-gun
     Kanagawa 243-0303 (JP)**
   • **KOMORI, Takashi
     Aiko-gun
     Kanagawa 243-0303 (JP)**

(74) Representative: **Thum, Bernhard
   Wuesthoff & Wuesthoff
   Patent- und Rechtsanwälte
   Schweigerstrasse 2
   81541 München (DE)**

(54)　**TOOL PATH GENERATION METHOD AND DEVICE**

(57)　A tool path generation device for machining a workpiece with a machine tool including a reading and interpreting portion which reads out a tool path from a machining program, a target coordinate value calculating portion which sets a plurality of target points at equal intervals on the read out tool path, and a curve approximation calculating portion which generates a tool path based on the plurality of target points, so as to obtain a smooth machined surface without formation of step differences between adjacent tool paths.

Fig.2

EP 2 495 628 A1

**Description**

TECHNICAL FIELD

The present invention relates to a tool path generation method and device for machining a workpiece with a machine tool.

BACKGROUND ART

A machining program includes movement instructions for feed axes of a machine tool. The movement instructions include information on positions. A tool is made to move relative to a workpiece at a predetermined speed up to a predetermined position so that the workpiece is machined to a predetermined shape. The path of movement of the tool, that is, the tool path, is prepared by converting the CAD data which is the information of the workpiece drawings, to line information by a CAM system. The machining program which is prepared by the CAM system includes coordinate values of destinations of movement for each block. In this Description, the coordinate values of the movement instructions of the machining program are called "block end points".

In recent years, due to improvements in the operational performance of machine tools, machine tools which operate faithfully in accordance with machining programs have become the norm. If using such a machine tool for machining, the path of movement of a tool, which moves in a bent line, is directly transferred to the machined surface of the workpiece so the desired smooth machined surface sometimes cannot be obtained. Further, if a tool moves at a high speed along a tool path including an arc or curve approximated by a bent line, rapid changes in acceleration occur at the feed axes at the block end points, and therefore, higher speed machining is obstructed. As methods for solving these problems, a smoothing technique where the CAM system or a control device of the numerical control machine tool replaces the tool path of the machining program with an NURBS able to be expressed by a numerical formula or other approximation curve for machining is known.

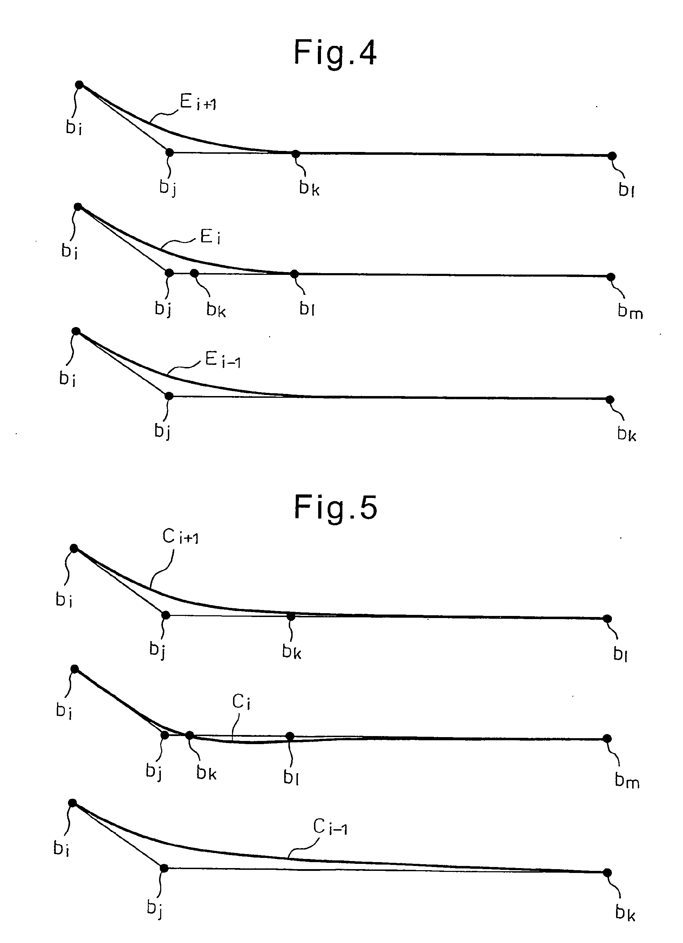

FIG. 5 shows an example of a tool path which is approximated in curve by the smoothing technique. In the approximation in curve, there is a characteristic in which the path of the approximation curve changes greatly due to slight differences in the degree of bending of the tool path, coordinate values of the block end points, and distances of line segments between adjacent block end points. For this reason, when machining a curved surface, the adjacent surrounding tool paths may become misaligned and form step differences between adjacent tool paths, and therefore, a smooth machined surface is not obtained. Here, "adjacent tool paths" are tool paths separated by the distance of the pick feed in reciprocating machining or contour machining.

An example of the related art of smoothing in which a smooth machined surface is obtained without formation of step differences between adjacent tool paths is disclosed in Patent Literature 1. Patent Literature 1 relates to a numerical control system designed to suppress the formation of step differences between tool paths and to machine a smooth curved surface in the pick feed direction as well. In paragraph no. 0019, there is a description which explains the specific configuration of a means for solution which is described in paragraph no. 0005, that is, "that is, the present embodiment detects the line segment connecting the adjacent paths of the surrounding paths $P_{i-1}$ and $P_{i+1}$ the closest in distance to the line segment which connects the adjacent point $P_{i,j}$ and point $P_{i,j+1}$ of the path $P_i$ so as to detect the curved parts of the surrounding paths close to the curve passing through the adjacent point $P_{i,j}$ and point $P_{i,j+1}$ of the path $P_i$, and uses the intermediate point position f(1/2) of the smooth curve f(t) which passes through the adjacent point $P_{i,j}$ and point $P_{i,j+1}$ and the positions g(tq) and h(tr) on the curve corresponding to the positions of the feet of the vertical lines at the smooth curves g(t) and h(t) which pass through the points at the two ends of the closest line segment detected at the surrounding paths so as to weight the position to insert the auxiliary point $P_{jH}$ between the point $P_{i,j}$ and the point $P_{i,j+1}$. Further, the present embodiment regards the inserted auxiliary point as an instruction point and calculates a smooth curve of the path $P_i$ so that the paths smoothly continue considering the curves of the paths $P_{i-1}$ and $P_{i+1}$ around the path $P_i$."

CITATION LIST

Patent Literature 1: Japanese Unexamined Patent Publication No. 2000-353006.

SUMMARY OF INVENTION

The method disclosed in Patent Literature 1 has the problem that, even if the original tool path is the same, a tool path ends up changing due to the adjacent paths. It is an object of the present invention to provide a tool path generation method and device that , if the original tool path is the same, the generated tool path becomes the same while it is possible so as to obtain a smooth machined surface without the formation of step differences between adjacent tool paths.

To achieve this object, according to the present invention, there is provided a tool path generation method for machining a workpiece with a machine tool, which includes reading out a tool path for machining a workpiece from a machining program, setting a plurality of target points at equal intervals on the read out tool path, calculating an approximation curve based on the plurality of target points, and generating a tool path along the approximation curve.

Further, according to the present invention, there is provided a tool path generation method for machining a workpiece with a machine tool, which includes reading out a tool path for machining a workpiece from a machining program, setting a plurality of target points at equal intervals on the read out tool path, calculating average coordinates of adjacent target points, and generating a tool path by connecting the average coordinates.

Further, according to the present invention, there is provided a tool path generation method wherein the target points are set so that linear distances between adjacent target points or distances on the tool path between adjacent target points become equal.

Further, according to the present invention, there is provided a tool path generation device for machining a workpiece with a machine tool, which includes a reading and interpreting portion reading out a tool path from a machining program, a target value calculating portion setting a plurality of target points at equal intervals on the tool path, and a calculating portion generating a tool path from the plurality of target points.

Further, according to the present invention, there is provided a tool path generation device wherein the calculating portion is a curve approximation calculating portion calculating an approximation curve for the plurality of target points to generate a tool path or an average coordinate calculating portion calculating average coordinates of adjacent pluralities of target points to generate a tool path.

As explained above, according to a tool path generation method and device of the present invention, a plurality of target points at equal intervals on a tool path is set, and an approximation curve or average coordinates is calculated from the plurality of target points to generate a tool path. Therefore, the same tool path is generated if the original tool path is the same, and it is possible to obtain a smooth machined surface without the formation of step differences between adjacent tool paths of similar original tool paths.

BRIEF DESCRIPTION OF DRAWINGS

FIG. 1 is a block diagram showing the configuration of principal parts of a tool path generation device of the present invention.
FIG. 2 is a view which showing one example of a tool path generation method.
FIG. 3 is a view showing another example of a tool path generation method.
FIG. 4 is an explanation view showing the state where no step difference arises at adjacent tool paths.
FIG. 5 is a explanation view showing one example where a step difference arises at adjacent tool paths.

DESCRIPTION OF EMBODIMENTS

A tool path generation device of the present invention is not limited to the control device 15 which is used together with the numerical control machine tool 10 which is shown in this specification. It may also be used for a CAM system which prepares a machining program based on the CAD data of a workpiece, a numerical control machine tool which has a built-in control device, or a personal computer. The control device 15 can read in a machining program which is prepared by a CAM system, then perform smoothing to generate a tool path, and use the generated tool path to rewrite the machining program 20. The rewritten machining programs 25A and 25B are stored in the memory in the system and can be read out for use in another machine tool or partially edited in contents of the machining programs. Note that, it is also possible to configure the system in a manner not provided with the function of rewriting the machining program or the function of storing the machining program. The control device can be applied to a vertical machining center which has a vertical spindle or a horizontal machining center which has a horizontal spindle or other machine tool.

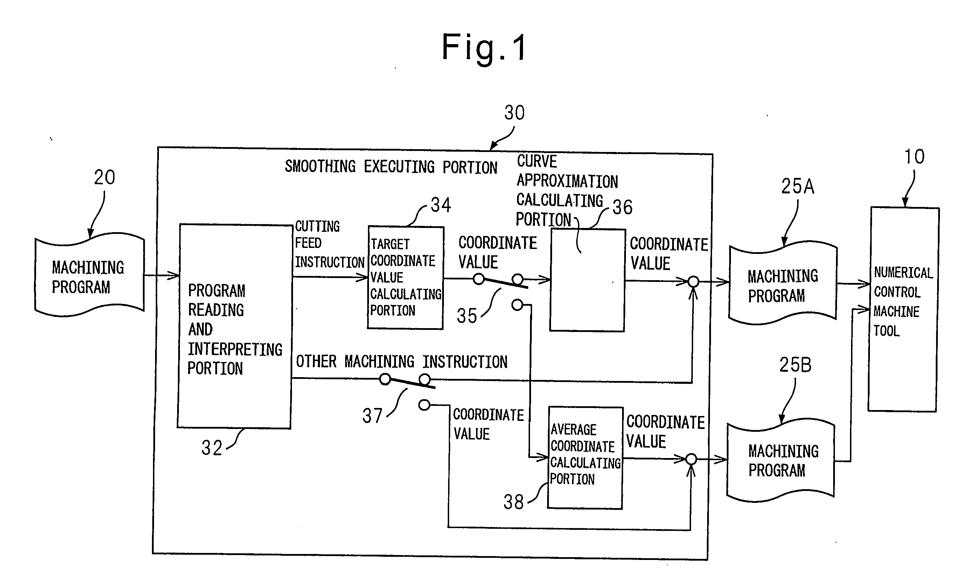

As shown in FIG. 1, the control device 15 of the present embodiment is provided with a smoothing executing portion 30 which processes the block end points of movement instructions of the machining program 20 for smoothing them. The smoothing executing portion 30 has a program reading and interpreting portion 32 which reads out a tool path from the machining program 20, a target coordinate value calculating portion 34 which sets a plurality of target points at equal intervals on the read out tool path, a curve approximation calculating portion 36 which processes the plurality of target points to smooth them by curve approximation, and an average coordinate calculating portion 38 which is provided in parallel with the curve approximation calculating portion 36 and which calculates the average coordinates from a plurality of adjacent target points to perform smoothing. The processing type switch units 35 and 37 can select one of the curve approximation calculating portion 36 and the average coordinate calculating portion 38.

The smoothing executing portion 30 can output the machining program 25A or machining program 25B which is written based on the generated tool path to the numerical control machine tool 10. The program reading and interpreting portion 32 has the function of separating cutting feed instructions and machining instructions other than the cutting feed instructions from the machining program 20 prepared by the CAM. The machining instructions other than the cutting feed instructions are transmitted to the downstream side of the curve approximation calculating portion 36 or downstream side of the average coordinate calculating portion 38. The machining program 20 is written based on the machining instructions and the generated information of the tool paths.

The program reading and interpreting portion 32 outputs linear interpolation instructions or curve interpolation instructions, which are movement instructions for cutting feed among the movement instructions of the feed axes of the machining program 20, to the target coordinate value calculating portion 34 for the smoothing. That is, the program reading and interpreting portion 32 has the function of recognizing cutting feed and fast feed, and is configured to perform the smoothing on only the movement instructions of the cutting feed for performing cutting. In the present embodiment, although smoothing is not performed for movement instructions of the feed axes for fast feed, smoothing may be performed for fast feed instructions in accordance with need.

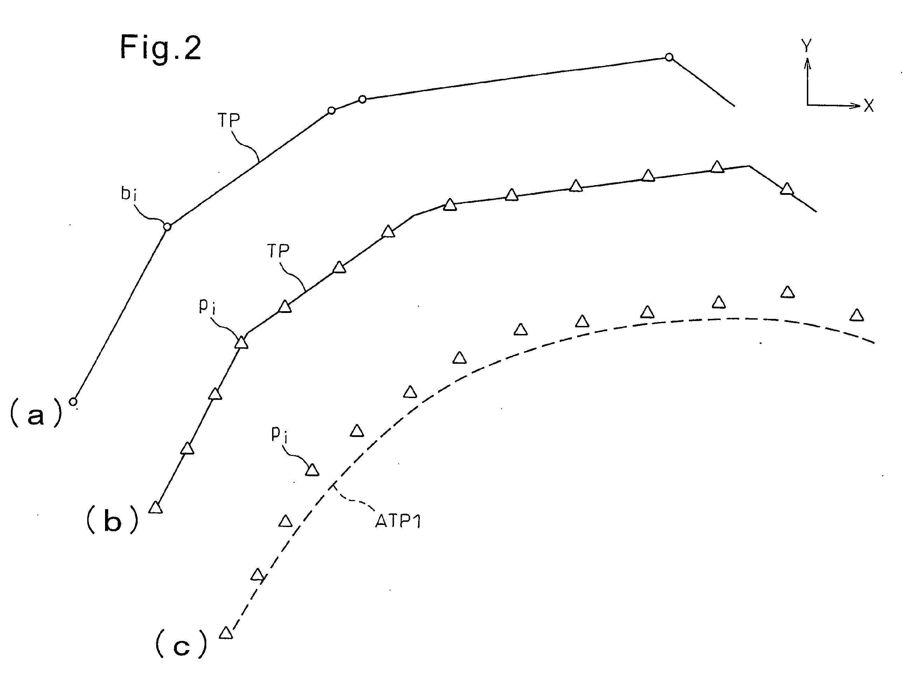

In FIG. 2, an example of a tool path ATP1 which is generated by the control device 15 of the present embodiment is shown. The generation method of the tool path ATP1 shown in (c) of FIG. 2 includes a step of reading movement instructions of the feed axes from a machining program 20 prepared by the CAM system, a step of setting a plurality of target points $p_i$ at equal intervals on a bent line (tool path) TP connecting block end points $b_i$ of the movement instructions, and a step of calculating an approximation curve for the plurality of target points $p_i$ and generating the tool path ATP1 along this approximation curve.

In (b) of FIG. 2, a plurality of target points $p_i$ which are set at equal intervals on the tool path by the target coordinate value calculating portion 34 is shown. As shown in (a) of FIG. 2, the bent line TP has five line segment regions due to five block end points $b_i$. The distances of the line segments between the adjacent block end points $b_i$ differ from each other. In (b) of FIG. 2, the bent line is divided by the plurality of target points $p_i$ which are set by the target coordinate value calculating portion 34 so that the distances (ways) on the tool path between adjacent target points $p_i$ become equal. The bent line may also is divided so that the linear distances between adjacent target points $p_i$ become equal. The number of target points $p_i$ is preferably made greater than the number of the block end points $b_i$. The larger the number of target points $p_i$, the closer to the original tool path the tool path ATP1 can be generated. (c) of FIG. 2 shows the tool path ATP1 which is generated by the curve approximation calculating portion 36 from a plurality of target points $p_i$. For the curve approximation, NURBS curve approximation, Bezier curve approximation, B-spline curve approximation, etc. may be applied. In the curve approximation of the present invention, the block end points $b_i$ of the movement instructions are not referred to, and coordinate values of the target points $p_i$ set so that the distances on the tool paths between the adjacent target points $p_i$ or the linear distances between adjacent target points $p_i$ become constant are used for smoothing. A curve approximated tool path ATP1, as shown in FIG. 4, is generated without step differences between adjacent tool paths $E_{i-1}$, $E_i$, and $E_{i+1}$. For this reason, smooth curved surfaces with no step differences are formed at the machined surfaces of the workpiece.

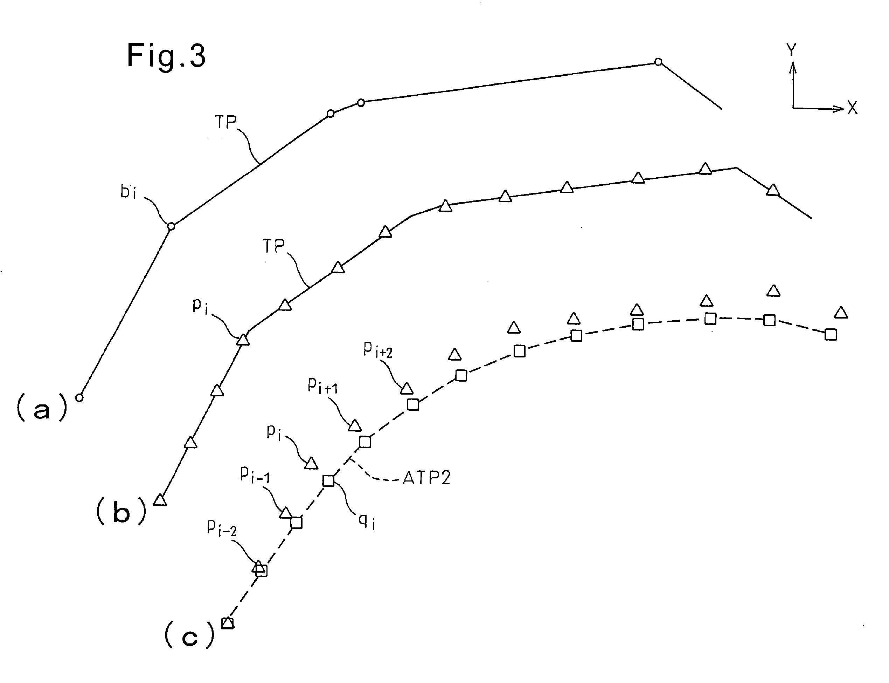

In FIG. 3, another example of a tool path which is generated by a control device 15 of the present embodiment is shown. The generation method of a tool path ATP2 shown in (c) of FIG. 3 includes a step of reading movement instructions of feed axes from a machining program 20 which was prepared by the CAM system, a step of setting a plurality of target points $p_i$ at equal intervals on a bent line (tool path) TP by connecting block end points $b_i$ of the movement instructions, and a step of calculating average coordinates of a plurality of adjacent target points $p_i$ and generating a tool path ATP2 by connecting these average coordinates.

In (c) of FIG. 3, the tool path ATP2 smoothed by the average coordinate calculating portion 38 is shown. The line of (a) of FIG. 3 is the same as the line of (a) of FIG. 2, while the line of (b) of FIG. 3 is the same as the line of (b) of FIG. 2. In the average coordinate calculating portion 38, the simple average or weighted average method is used to calculate the average coordinates $q_i$ from the coordinate values of the plurality of target points $p_i$. With the simple average method, the coordinate values (x, y, z) of the three points ($p_{i-1}$, $p_i$, $p_{i+1}$) of, for example, the target point $p_i$ and the target points before and after it are averaged to calculate the coordinate values (x, y, z) of the single average coordinate qi. By repeatedly calculating the simple average for the coordinate values (x, y, z) of all of the target points $p_i$, the coordinate values (x, y, z) of all of the average coordinates $q_i$ are calculated. The weighted average method is the method of calculating by weighting the coordinate values (x, y, z) of the target points $p_i$ which are averaged, as shown in the following formula. In this method, the closer a point in distance from the target point $p_i$, the larger the coefficient that is multiplied with the coordinate values of the target point for calculation.

$$q_i = \frac{(p_{i-2}) + 2(p_{i-1}) + 3(p_i) + 2(p_{i+1}) + (p_{i+2})}{9}$$

Further, by adjusting the number of target points for averaging, it is possible to adjust the extent of smoothing. When increasing the number of target points, the extent of smoothness is increased and a smooth tool path can be obtained. When reducing the number of target points, the extent of smoothness is decreased and a relatively sharp tool path close to the target points $p_i$ can be obtained. Whether to carry out the simple average or carry out the weighted average is determined considering the extent of error in shape of the tool path, speed of calculation of the apparatus, etc. As shown in (c) of FIG. 3, the smoothed tool path ATP2 is smoothly generated without step differences between the adjacent tool paths in the same way as the tool path ATP1. For this reason, the machined surface of the workpiece can be formed with a smooth curved surface with no step differences.

In this way, according to the control device 15 of the present embodiment, by setting a plurality of target points $p_i$ at equal intervals on the tool path TP of a machining program prepared by the CAM system and calculating an approximation curve or average coordinates from the plurality of target points $p_i$ to generate the tool paths ATP1 and ATP2, it is possible to obtain a smooth machined surface without formation of step differences between adjacent tool paths.

Further, the obtained tool paths ATP1 and ATP2 become smoother in changes of curvature and rapid changes in acceleration can be suppressed. Therefore, the impact at the time of machining is eased, so the fluctuations in the cutting resistance become smaller and the quality of the machined surface can be raised.

Note that, the present invention is not limited to the above embodiments. It is possible to make various changes within the range not outside the framework of the present invention.

REFERENCE SIGNS LIST

| | |
|---|---|
| 10 | NUMERICAL CONTROL MACHINE TOOL |
| 15 | CONTROL DEVICE |
| 30 | SMOOTHING EXECUTING PORTION |
| 32 | PROGRAM READING AND INTERPRETING PORTION34 TARGET COORDINATE VALUE CALCULATING PORTION |
| 36 | CURVE APPROXIMATION CALCULATING PORTION |
| 38 | AVERAGE COORDINATE CALCULATING PORTION |
| TP | TOOL PATH |
| ATP1, ATP2 | SMOOTHED TOOL PATH |

**Claims**

1. A tool path generation method for machining a workpiece with a machine tool comprising:

    reading out a tool path for machining a workpiece from a machining program;
    setting a plurality of target points at equal intervals on the read out tool path;
    calculating an approximation curve based on the plurality of target points; and
    generating a tool path along the approximation curve.

2. A tool path generation method for machining a workpiece with a machine tool comprising:

    reading out a tool path for machining a workpiece from a machining program;
    setting a plurality of target points at equal intervals on the read out tool path;
    calculating average coordinates of adjacent target points, and
    generating a tool path by connecting the average coordinates.

3. The tool path generation method according to claim 1 or 2, wherein the target points are set so that linear distances between adjacent target points or distances on the tool path between adjacent target points become equal.

4. A tool path generation device for machining a workpiece with a machine tool comprising:

    a reading and interpreting portion reading out a tool path from a machining program;
    a target value calculating portion setting a plurality of target points at equal intervals on the tool path; and
    a calculating portion generating a tool path from the plurality of target points.

**5.** The tool path generation device according to claim 4,
wherein the calculating portion is a curve approximation calculating portion calculating an approximation curve for the plurality of target points to generate a tool path or an average coordinate calculating portion calculating average coordinates of adjacent pluralities of target points to generate a tool path.

# Fig.1

EP 2 495 628 A1

Fig.2

EP 2 495 628 A1

## Fig.3

EP 2 495 628 A1

# Fig.4

# Fig.5

<table>
<tr><td colspan="2">**INTERNATIONAL SEARCH REPORT**</td><td>International application No.<br>PCT/JP2010/069762</td></tr>
</table>

A.  CLASSIFICATION OF SUBJECT MATTER
*G05B19/4103*(2006.01)i, *B23Q15/00*(2006.01)i, *G05B19/4093*(2006.01)i

According to International Patent Classification (IPC) or to both national classification and IPC

B.  FIELDS SEARCHED

Minimum documentation searched (classification system followed by classification symbols)
G05B19/18-19/416, G05B19/42-19/46, B23Q15/00-15/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 9-265310 A  (Toyota Motor Corp.),<br>07 October 1997 (07.10.1997),<br>entire text; all drawings<br>& US 5953233 A          & EP 798616 A2<br>& DE 69712824 D          & DE 69712824 T<br>& KR 10-0214230 B | 1,3-5<br>2 |
| Y | JP 2002-283099 A  (Coretec Inc.),<br>02 October 2002 (02.10.2002),<br>paragraphs [0009] to [0021]; all drawings<br>(Family: none) | 2 |
| A | JP 2003-67020 A  (Mitsubishi Electric Corp.),<br>07 March 2003 (07.03.2003),<br>entire text; all drawings<br>(Family: none) | 1-5 |

☐  Further documents are listed in the continuation of Box C.        ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    26 November, 2010 (26.11.10) | Date of mailing of the international search report<br>    07 December, 2010 (07.12.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**EP 2 495 628 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000353006 A